Europäisches Patentamt

European Patent Office

Office européen des brevets

(11) Veröffentlichungsnummer: **0 092 032**
**B1**

(12) **EUROPÄISCHE PATENTSCHRIFT**

(45) Veröffentlichungstag der Patentschrift:
30.04.86

(21) Anmeldenummer: 83101367.7

(22) Anmeldetag: 12.02.83

(51) Int. Cl.⁴: **F 24 D 3/10**

(54) Vorrichtung zum Übergeben von Wärme von einer Versorgungsleitung zu einem Abnehmer.

(30) Priorität: **21.04.82 DE 3214775**

(43) Veröffentlichungstag der Anmeldung:
**26.10.83 Patentblatt 83/43**

(45) Bekanntmachung des Hinweises auf die Patenterteilung:
**30.04.86 Patentblatt 86/18**

(84) Benannte Vertragsstaaten:
**AT BE CH DE FR GB IT LI NL**

(56) Entgegenhaltungen:
**DE - A - 2 014 093**
**DE - B - 2 507 044**
**FR - A - 1 284 727**

(73) Patentinhaber: **IWK Regler und Kompensatoren GmbH, Singerstrasse, D-7513 Stutensee (DE)**

(72) Erfinder: **Mall, Horst Hasso, Rechts der Alb 19, D-7500 Karlsruhe (DE)**

(74) Vertreter: **Dr.-Ing. Hans Lichti Dipl.-Ing. Heiner Lichti Dipl.-Phys. Dr. Jost Lempert, Postfach 41 07 60 Durlacher Strasse 31, D-7500 Karlsruhe 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Vorrichtung zum Übergeben von in einem Fluid gespeicherter Wärme von einer Versorgungsleitung zu einem Abnehmer, mit Versorgungsvorlauf, -rücklauf, Abnehmervor lauf, -rücklauf sowie gegebenenfalls Bypass- und/oder Sicherheitsleitung.

Bei der Übergabe von Wärme von einem Fernwärmesystem zu einem Abnehmer oder Verbraucher, beispielsweise einem Haus, einer Siedlung oder dgl., sind relativ komplizierte Übergabesysteme erforderlich, in denen der hohe Druck des Versorgungssystems auf den geringeren Druck des Abnehmersystems vermindert werden muß. Die verschiedenen Fernwär mebetriebe stellen unterschiedliche Anforderungen an Übergabeeinheiten und insbesondere Ausrüstung derselben. Es müssen eine Vielzahl von Meß- und Regelungsvorgänge, wie z. B. zur Durchfluß-, Differenzdruck- und Temperaturregelung vorgenommen werden und mehrere Regelkreise mit dementsprechenden Organe und Komponenten vorgesehen sein. Auch müssen Sicherheitseinrichtungen, insbesondere Druckabsicherungen, in einer solchen Übergabevorrichtung mit aufgenommen werden. Bisher werden in der Praxis solche Übergabevorrichtungen aus Heizungsrohren, einschließlich zugehörigen Winkel-, Abzweig (T) und Kreuzungselementen in herkömmlicher Weise zusammengestellt und mit den entsprechenden Komponenten und Armaturen versehen. Dies ist fertigungsmäßig recht aufwendig und, führt aufgrund der vielen Verbindungs-, Umlenk- und Anschlußstücke zu einem recht großen Gewicht. Es gibt bisher keine Übergabestationen fur alle Anforderungen; die Herstel lung größerer Stückzahlen ist daher nichtgegeben. Außerdem wird die Größe der Vorrichtung weniger durch die Anzahl der Armaturen und Regelungskomponenten als vielmehr durch die Rohre und deren Verbindungsstücke etc. bestimmt. Es ist schon bekannt, derart zusammengestellte Übergabevorrichtungen mit einem individuell angepaßten Gehäuse zu umgeben. Gußteile mit sich kreuzenden Leitungen und Ventilen sind an sich bei einer Verteilereinrichtung für eine Zentral heizung aus der FR-A-12 84 727 bekannt. Die DE-A-25 07 044 zeigt eine bausatzartig zusammensetzbare Verteilerstat ion, mit getrennten Baueinheiten für Wärme- und Elektroversorgung sowie einer Zwischenebene zur Verteilung der Energie zu den einzelnen Energieverbrauchern, wodurch eine gewisse Variabilität der Anschlußmöglichkeiten erreicht werden soll.

Der Erfindung liegt die Aufgabe zugrunde, unter Vermeidung der vorgenannten Nachteile eine fertigungsmäßig einfach herzustellende, kompakte und leichte gattungsgemäße Vorrichtung zu schaffen, die werkseitig variabel an in unterschiedlichste Anforderungen hinsichtlich Meß- und Regelvorgänge in beliebiger Weise anpaßbar ist.

Erfindungsgemäß wird die genannte Aufgabe dadurch gelöst, daß sich zumindest teilweise schneidende Gußblock-Längs- und Querleitungen vorgesehen sind; daß die Leitungen an zumindest einigen ihrer Kreuzungspunkten miteinander ohne zwischengesetzte Verzweigungsrohrteile, in Verbindung stehen; daß in den Leitungen Sperrwände vorgesehen sind, die einen sich parallel zur Leitungsrichtung erstreckenden Längsabschnitt aufweisen; und daß der Gußblock als variable Matrix ausgebildet ist, indem in Längsabschnitten der Sperrwände verschließbare Durchlässe ausgebildet sind und in einer benachbar ten Außenwand mit einem Durchlaß eine verschließbare Öffnung fluchtet, die mindestens einen ebenso großen Durchmesser wie der Durchlaß aufweist. Die Erfindung schafft damit eine Vorrichtung in Form eines Handblechsystems, die es als zentrales Übergabeelement ermöglicht Heißwasser von einem Fernheizwerk durch Messen und Regeln von Drücken, Temperaturen und Volumenströmen regelungstechnisch für die Abnehmeranlage aufzuarbeiten.

Die erfindungsgemäße Vorrichtung wird aus wenigen Einzelteilen erstellt und vorteilhafter Weise in einem Block gegossen, wobei in der matrixförmigen Anordnung dann schon sämtliche erforderlichen Verbindungsleitungen sowie Bypaßleitungen, Sicherheitsleitungen etc. vorgesehen sind und nur in geeigneter entsprechender Weise geschaltet werden müssen. Die erfindungsgemäße Vorrichtung stellt so eine variable Schnittstelle zur Verbindung zwischen Fernheizsystem und Verbraucher dar. Sie ist auch in einer wesentlich geringeren Größe ausbildbar als dies bisher der Fall war. Dadurch, daß separate Verbindungselemente wegfallen und diese ebenfalls in dem matrixförmigen Gußblockteil integriert sind, ist eine erhebliche Gewichtseinspar ung bei gleicher Druckbeständigkeit möglich. Ein wesentlicher Vorteil besteht darüber hinaus darin, daß die erfindungsgemäße Vorrichtung durch Absperren einzelner Zweige etc., also insbesondere durch Vornehmen von Schaltvorgängen an vielfältigste unterschiedlichste Anforderungen anpaßbar ist.

Eine bevorzugte Ausführungsform der erfindungsgemäßen Vorrichtung zeichnet sich insbesondere dadurch aus, daß die Hauptachsen der Längs- und Querleitungen in parallelen Ebenen mit beschränktem Abstand liegen. Hierdurch wird in fertigungsmäßiger Hinsicht ein Optimum erreicht. Außerdem ist die Vorrichtung flach auszubilden, so daß sie in bequemer Weise in einem Gehäuse untergebracht werden kann, das dann auch gegen Wärmeverluste isolierbar ist.

In einer weiteren äußerst bevorzugten Ausgestaltung ist vorgesehen, daß in der Trennwand zwischen einer Längs- und einer Querleitung ein verschließbarer Durchlaß ausgebildet ist. Quer- und Längsleitungen können sich also entweder kreuzen, ohne daß sie miteinander in Verbindung stehen, indem sie durch eine vollständig geschlossene Querwand getrennt sind. Die Querund Längsleitungen können aber auch in Verbindung stehen, indem in der Quer- oder Längswand ein Durchbruch vorgesehen ist, der dann, falls erforderlich, nachträglich durch einen Schraubverschluß von außen verschlossen werden kann. Der Verbindungsdurchlaß kann aber auch für einen Ventilsitz dienen, wodurch eine Steuerung des Flüssigkeitsflusses von einer Querleitung zu einer Längsleitung an dem Kreuzungspunkt möglich ist.

Es sind herkömmliche, marktübliche Wärmetauscher in einfacher Weise anschließbar, so daß eine indirekte Wärmeübergabe erfolgt, was besonders zur Brauchwasserversorgung notwendig ist, da dieses nicht direkt aus dem Fernwärmesystem entnommen werden kann.

Weitere Vorteile und Merkmale der Erfindung ergeben sich aus den Ansprüchen und aus der nachfolgenden Beschreibung, in der Ausführungsbeispiele der erfindungsgemäßen Vorrichtung im einzelnen erläutert sind.

Dabei zeigt:

Figur 1 ein erstes Ausführungsbeispiel der erfindungsgemäßen Vorrichtung in einer Grundform, schematisch in Aufsicht dargestellt;

Figur 2 eine schematisch dargestellte Ausführungsform mit Schaltkomponenten, grundsätzlich entsprechend eines Schnitts entlang II-II der Figur 1;

Figur 3 einen Schnitt ähnlich der Figur 2 einer weiteren schematischen Ausführungsform der erfindungsgemäßen Vorrichtung;

Figur 4 eine bevorzugte Ausführungsform der erfindungsgemäßen Vorrichtung in perspektivischer Darstellung;

Figur 5 einen Längsschnitt in der Matrixebene durch eine der Figur 4 ähnlichen Ausführungsform;

Figur 6 einen Schnitt entlang VI-VI der Ausführungsform der Figur 5;

Figur 7 einen Schnitt entlang VII-VII durch die Figur 5 und

Figur 8 einen Schnitt entlang VIII-VIII der Ausführungsform der Figur 5.

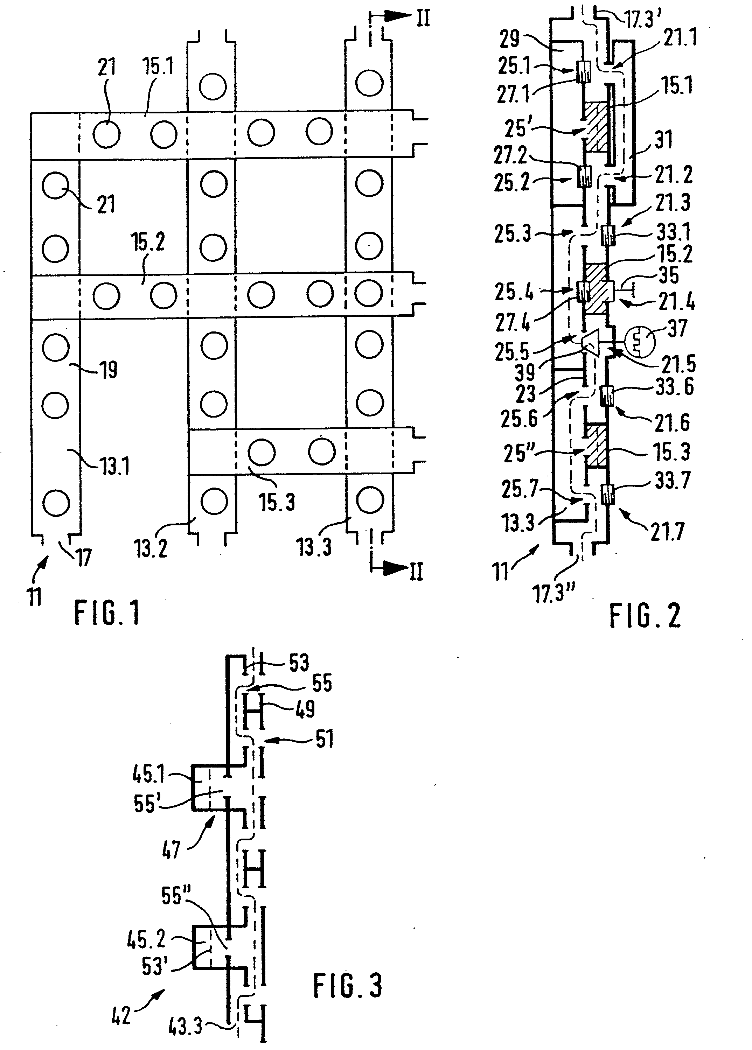

Die in der Figur 1 dargestellte erfindungsgemäße Vorrichtung zum Übergeben von Wärme von einer Versorgungsleitung zu einem Abnehmer, also die dargestellte Kompakt-Wärmestation, besteht aus einem Raster oder einer Matrix 11 von Leitungen. Im dargestellten Ausführungsbeispiel sind drei Längsleitungen 13.1, 13.2 und 13.3 und ebenso viele Verbdindungsoder Querleitungen 15.1, 15.2 und 15.3 vorgesehen, die, wie ersichtlich ist, nicht alle vollständig über die zu einer betrachteten Leitung senkrecht verlaufenden Leitungen hinwegführen, sondern teilweise kürzer ausgebildet sind. Darüber hinaus muß nicht jede Leitung 13, 15 mit Anschlußmöglich-keiten 17 versehen sein. Die Leitungen 13, 15 bestehen aus Vierkant-Druckguß, wobei die gesamte Matrix 11 in einem Stück ausgeführt ist. Jede Leitung 13, 15 ist zumindest auf der in Figur 1 sichtbaren Seitenfläche 19 mit Öffnungen 21 versehen. Die Öffnungen weisen im allgemeinen ein Schraubgeweinde auf, so daß an den Öffnungen weitere Komponenten und Elemente, wie Schaltkomponenten, Regler, Ventile usw. eingebaut werden können oder einfach, falls ein solches Element nicht notwendig ist, ein Verschlußstopfen eingeschraubt werden kann.

In entsprechender Weise ist die innere Struktur der Matrix 11 ausgebildet, wie in Figur 2 zu sehen ist. Entlang der Leitung 13.3 in Richtung derselben ist in ihrem Inneren eine mit Unterbrechung versehene Längswand 23 vorgesehen, durch die der Flüssigkeitsweg in gewisser Weise schlangenförmig verläuft. Die Unterbrechungen oder Durchbrüche 25 der Längswand 23 fluchten dabei mit jeweils einer Öffnung 21. Die Durchmesser der Durchbrüche 25 sind dabei höchstens genauso groß wie die Durchmesser der Öffnungen 21, vorzugsweise aber kleiner, so daß durch die Öffnung 21 ein für den zugeordneten Durchbruch 25 bestimmtes Element eingebracht werden kann. Die Durchbrüche 25 weisen vorzugsweise einerseits ein Schraubgewinde auf, so daß in ihnen auch beispielsweise Verschlüsse eingesetzt werden können und/oder andererseits einen konischen Ventilsitz. Bevorzugte Ausgestal.tungen der Durchbrüche 25 werden noch weiter unten erläutert.

Der Verbindungsdurchbruch 25' zwischen der Längsleitung 13.3 und der Querleitung 15.1 in der Figur 2 ist nicht verschließbar (vgl. weiter unten zum Durchbruch 25.4), so daß für den Fall, daß zwischen der Längsleitung 13.3 und der Querleitung 15.1 keine Verbindung hergestellt werden soll, folgendermaßen vorgegangen wird: Die Durchbrüche 25.1 und 25.2 werden von den Öffnungen 21.1 und 21.2 her mittels Schraubpfropfen 27.1 und 27.2 verschlossen. Hierdurch wird verhindert, daß die Leitungen 13.3 und 15.1 in Verbindung stehen, da der Teilzweig 29 der Leitung 13.3 durch die Pfropfen 27.1 und 27.2 abgesperrt wird. So ist aber an sich die Leitung 13.3 unterbrochen. Die Unterbrechung ist daher von der Öffnung 21.1 zu einer Öffnung 21.2 mittels eines Bypass 31 überbrückt, so daß das Fluid den gestrichelt in der Figur 2 eingezeichneten Weg nehmen kann. Die Öffnung 21.3 ist mit einem Schraubpfropfen 33.1 verschlossen, während der zugeordnete Durchbruch 25.3 unverschlossen ist, so daß hier das Fluid ungehindert durchtreten kann. Bei dem dargestellten Ausführungsbeispiel ist ebenfalls vorgesehen, daß keine Verbindung zwischen der Längsleitung 13.3 und der Querleitung 15.2 besteht. Der Durchbruch 25.4 ist daher ebenfalls mittels eines Schraubpfropfens 27.4 verschlossen, der hierzu durch die Öffnung 21.4 in die Leitung 13.3 eingeführt wurde. In der Öffnung 21.4 sitzt ein Meßfuhler 35 zur Messung einer Größe des Fluids in der Querleitung 15.2, beispielsweise also ein Temperaturmesser.

In der Öffnung 21.5 und dem Durchbruch 25.5 ist ein Stellglied 37 angeordnet, das in der Öffnung 21.5 befestigt ist und mittels seines Ventilkegels 39, der in den Durchbruch 25.5 eingreift, den Durchfluß der Leitung 13.3 regeln kann. Der Durchbruch 25.6 ist wieder völlig offen und die zugeordnete Öffnung 21.6 mit einem Pfropfen 33.6 verschlossen. Der Verbindungsdurchbruch 25" zwischen der Längsleitung 13.3 und der Querleitung 15.3 ist geöffnet, so daß Fluid zwischen den beiden Leitungen übertreten kann. Wenn dem Durchbruch 25" eine entsprechende Öffnung zugeordnet wäre, so könnte hier beispielsweise ebenfalls ein Regelglied oder ein Absperrorgan in dem Durchbruch 25.7 angeordnet werden. Die unterhalb des Durchbruchs 25" anschließende Öffnung 21.7 ist durch einen Schraubpfropfen 33.7 verschlossen, während der zugeordneten Durchbruch 25.7 offen ist. Insgesamt kann Flüssigkeit zwischen dem Anschluß 17.3' und dem Anschluß 17.3" entlang der in der Leitung 13.3 gestrichelt gezeichneten Linie fließen. In den Öffnungen 21 und den zugeordneten Durchbrüchen 25 können dabei verschiedene Schaltkomponenten, wie Absperrorgane, Regelglieder, Meßelemente, wie Temperaturfühler, angeordnet werden. Insgesamt kann die Matrix 11 durch solche Komponenten und Elemente in den Durchbrüchen und Öffnungen in vielfältigster Weise angepaßt an verschiedenartigste Anforderungen geschaltet und eingerichtet werden.

In der Figur 3 ist ein anderes Ausführungsbeispiel dargestellt, bei dem die Längsleitungen, von denen stellvertretend eine Längsleitung 43.3 dargestellt ist und die Querleitungen, von denen stellvertretend eine Querleitung 45.1 und eine Querleitung 45.2 dargestellt sind, nicht einstückig ausgebildet sind. Die Matrix 42 der Figur 3 entsteht vielmehr dadurch, daß Vierkantrohre, entsprechend 45.1, 45.2 und 43.3. rasterförmig aufeinandergeschweißt sind, wobei in den Verbindungsbereichen 47 jeweils Durchbrüche 55' bzw. 55" zwischen Quer- und Längsleitungen vorhanden sind, so daß, soweit gewünscht, Flüssigkeit zwischen den Quer- und Längsleitungen fließen kann. Die Leitungen weisen, entsprechend der Ausgestaltung der Figur 2, ebenfalls entlang ihrer Längsrichtung sich erstreckende Schott- oder Unterbrechungswände 53 bzw. 53' mit Durchbrüchen 55 auf. Die Außenwand 49 der Leitungen ist mit Öffnungen 51 versehen, die mit einem zugeordneten Durchbruch 55 in der Schottwand 53 jeweils fluchten. Die Matrix 41 der Figur 3 kann in gleicher Weise wie die Matrix der Figuren 1 und 2 mit den erwähnten Komponenten und Elementen in den Öffnungen 51 und den Durchbrüchen 55 versehen werden.

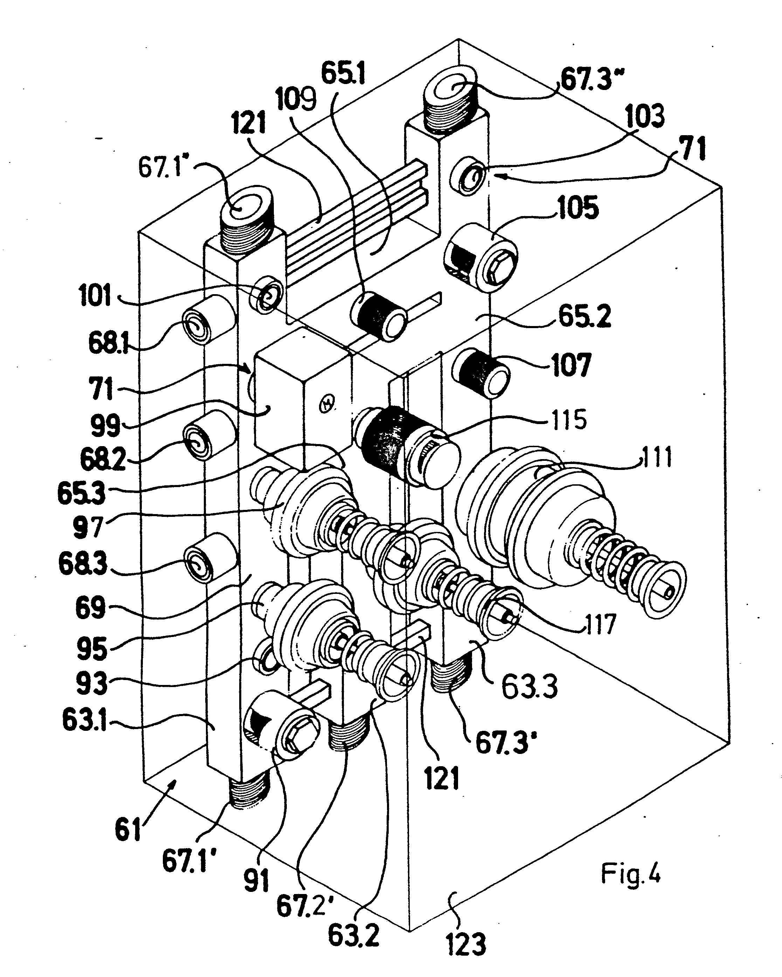

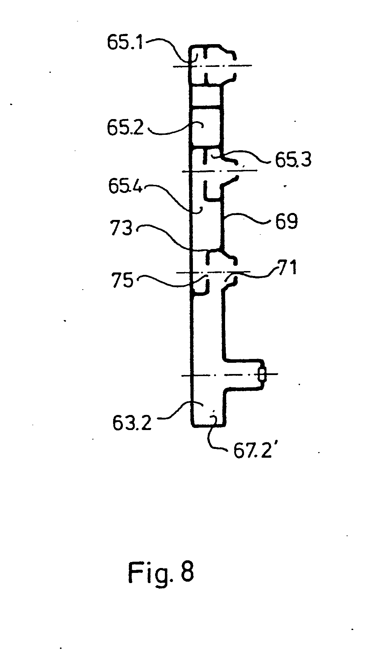

Während die vorgenannten Beispiele den Kern der Erfindung illustrieren und erläutern, wird im folgenden eine konkrete Ausführungsform unter Bezugnahme auf die Figuren 4 bis 8 erläutert.

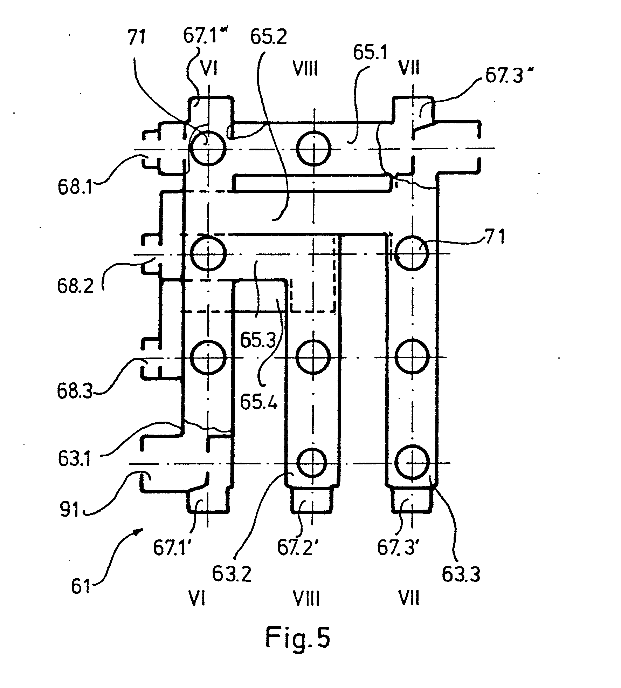

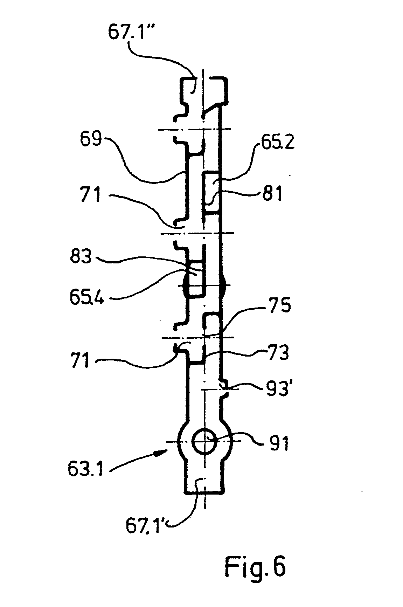

Die erfindungsgemäße Vorrichtung der Figur 4 besteht aus einem Raster oder einer Matrix 61 aus Vierkantrohren. Die Matrix 61 ist einstückig in Druck- oder Grauguß hergestellt. Die Matrix 61 weist drei Längsleitungen 63.1, 63.2 und 63.3 sowie vier Querleitungen 65.1, 65.2, 65.3 und 65.4 (Figur 5) auf, wobei letztere beiden in Figur 4 weitgehend verdeckt und 65.2 nur in einem kurzen Stück sichtbar ist. Sämtliche Leitungen 63, 65 weisen Anschlüsse zum Anschluß üblicher Rohrleitungen auf. Die Längsleitung 63.1 hat die Anschlüsse 67. 1' und 67. 1". Die Längsleitungen 63.2 und 63.3 haben entsprechende Anschlüsse 67.2'bzw. 67.3'und 67.3". Die Längsleitung 63.2 hat al so nur einen Anschluß 67.2'. Die Querleitungen 65.3 und 65.4 haben jeweils einen Anschluß 68.2 und 68.3. Die dem Betrachter zugewandte, sich in der Matrixebene erstreckende Oberfläche 69 (Figur 6) der erfindungsgemäßen Vorrichtung ist in der schon beschriebenen Weise mit Öffnungen 71 versehen, die bei der dar gestellten Ausführungsform alle mit Absperrorganen, Reglern, Stellgliedern oder Meßelementen verschlossen sind. Den Offnungen 71 sind im Innern der Matrix 61 wieder fluchtende Durchbrüche 75 in Längsabschnitten eine Längsode Sperrwand 73 zugeordnet, die insbesondere in den Figuren 6 bis 8 sichtbar sind.

Der Anschluß 67.1' dient als Vorlaufeinlaß für den Vorlauf der Versorgungsleitung, wie einer Fernwärmeversorgung oder dgl.. Der Anschluß 67. 1" ist der Auslaß der erfindungsgemäßen Vorrichtung zum Vorlauf des Abnehmers oder Verbrauchers, wie einer Heizungsanlage eines Hauses. Uber den Anschluß 67.3" kommt der Rücklauf des Verbrauchers wieder zur erfindungsgemäßen Vorrichtung und wird dann über den Anschluß 67.3' an den Rücklauf des Versorgungssystems abgegeben. Vorlauf 67.1" und Rücklauf 67.3" des Abnehmers sind über die als Bypass dienende Querleitung 65.1 miteinander verbunden, so daß je nach Erfordernis Flüssigkeit aus dem Rücklauf dem Vorlauf beigemischt werden kann. Mit dieser Möglichkeit der Beimischung von Flüssigkeit aus dem Rücklauf als Abnehmerkreislauf zum Vorlauf über den Bypaß 65.1 und mit dem Motorventil 99 wird die erfindungsgemäßen Vorrichtung als sog. Hauszentrale eingesetzt und ist dann schon Teil des Abnehmer- oder Hauskreislaufs. Es besteht aber auch grundsätzlich die Möglichkeit, den Bypaß 65.1 vollständig zu sperren (oder auch die Vorrichtung ohne einen solchen auszubilden), wenn die erfindungsgemäße Vorrichtung vom Fernwärmelieferant als sogenannte Fernwärmeübergabestation zur Verfügung gestellt wird, wobei dann in einer solchen Stationen keine Rücklaufbeimischung gegeben sein soll, da dies nicht zu den Pflichten des Fernwärmelieferanten gehört. Die Ankopplung hausseitig ist Sache des Wärmeabnehmers. In diesem Falle wird dann der "Hauskreislauf" erst nach den Anschlüssen 67.1" und 67.3" beginnen und einen eigenen Bypass aufweisen. Falls eine solche Trennung gewünscht wird, können im übrigen auch zwei erfindungsgemäße kompakte Vorrichtungen unterschiedlicher oder gleicher Grundform hintereinander geschaltet sein, wobei die erste als Fernwärmeübergabestation und die zweite als Hauszentrale dient.

Über die Querleitungen 65.3 wird aus der Versorger-Vorlaufleitung 63.1 Flüssigkeit abgezweigt und zwar einerseits zu der als Sicherheits-Überströmungs-Bypass dienenden Längsleitung 63.2, aus der andererseits ein Boilervorlauf zum Anschluß 68.3 über die Querleitung 65.4 abgenommen wird. Der Boilerrücklauf erfolgt über den Anschluß 68.2 und die mit diesem verbundene Querleitung 65.2 zum Versorger-Rücklauf in der Längsleitung 63.3. Boilervorlauf und Boilerrücklauf, also die Querleitungen 65.4 und 65.2 kreuzen die Längsleitung 63.1 ohne Austauschmöglichkeit. Es sind hier also durchgehende, abdichtende Schottwände 81, 83 vorgesehen (Fig. 6). Der aus der Längsleitung 63.1 oberhalb des Boilerrücklauf-Anschlusses 68.2 herausführende Anschluß 68.1 dient als Sicherheitsauslaß und ist als solcher mit einem Sicherheitsventil (nicht dargestellt) versehen. Die sicherheits- Überströmungsleitung 63.2 kann in den Versorger-Rücklauf zurückgeführt werden, was ebenfalls, anders als beim konkret dargestellten Ausführungsbeispiel, durch eine weitere Querleitung erfolgen könnte.

Die vom Versorger-Vorlauf 67.1' zugeführte Heizungsflüssigkeit fließt also über die Leitung 63.1 einerseits zum Heizungsvorlauf beim Auslaß 67.1'', andererseits über die Querleitung 65.3 zunächst zur als Sicherheits-Überströmungs-B ypass dienenden Längsleitung 63.2, aber auch über die Querleitung 65.4 zum Boilervorlauf. Der Verbraucher- oder Heizungsrücklauf erfolgt über den Anschlun 67.3'' zur Längsleitung 63.3 und damit über den Anschluß 67.3' zum Versorger-Rücklauf. Über die Bypass-Querleitungen 65.1 ist eine Beimischung des Verbraucherrücklaufs zum Verbrauchervorlauf mögl ich. Der Boilerrücklauf erfolgt über die die Längsleitung 63.1 verbindungsfrei kreuzende Querleitung 65.2 zur Rücklauf-Längsleitung 63.3.

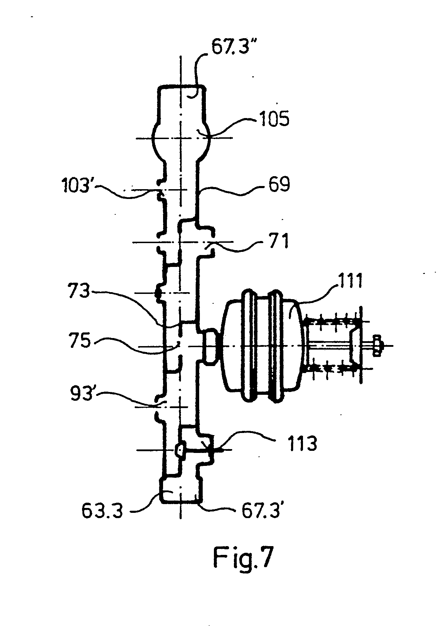

Wie schon erwähnt, sind nun in den Öffnungen 71 der einzelnen Leitungen 63, 65 bei der Ausgestaltung der Figur 4, wie beispielhaft darüber hinaus in einigen Fällen auch in der Figur 7 ersichtlich ist, Meßelemente, Absperrorgane, Regler bzw. Stellglieder vorgesehen. In der Leitung 63.1 des Versorger-Vorlaufs ist zunächst ein Schmutzfänger 91 angeordnet, der verhindert, daß aus dem Versorgersystem Schmutz in das Abnehmersystem gelangt. Hieran schließt sich ein Versorger-Vorlauftemperaturfühler 93 (Figur 4) an, für den bei der Ausgestaltung nach den Figuren 5 und 6 an der der Fläche 69 gegenüberliegenden Fläche eine Anschlußöffnung 93' vorgesehen ist. Der Temperaturfühler 93 arbeitet in Verbindung mit dem Durchfluß- und Wärmemengenzähler (nicht dargestellt). Es schließt sich eine Sicherheitsarmatur 95 an, die beim Ausfallen des nachfolgenden Druckminderers 97 die Leitung 63.1 sperrt. Die nächste Armatur ist ein Motorventil 99, das den Vorlauf regelt. Oberhalb des Motorventils 99 ist ein Temperaturfühler 101 für die Messung der Temperatur des Verbraucher-Vorlaufs vorgesehen.

In der Rücklaufleitung 63.3 ist zunächst - von oben nach unten - ein Temperaturfühler 103 mit Anschlußöffnung 103' (Figur 7) für den Verbraucher-Rücklauf vorgesehen. Vorlauf- und Rücklauftemperaturfühler 101 und 103 bestimmen, gegebenenfalls in Zusammenhang mit sonstigen Parametern, die Regelung der Vorlauftemperatur des Verbrauchers und zwar über die Zumischung des Rücklaufanteils über die Qeruleitung 65.1 zum Verbraucher-Vorlauf mittels des Motorventils 99. Üblicherweise ist, wie bekannt, zur Umwälzung dem Verbraucherkreislauf eine Pumpe vorgesehen (nicht dargestellt). In der Leitung 63.3 ist weiterhin ein Schmutzfänger 105 angeordnet, der verhindert, daß Schmutz aus dem Verbraucher-Kreislauf in das Versorgersystem gelangt. Weiterhin sind in der Leitung 63.3, aber auch in der Leitung 65.1, mit Rückschlagorganen kombinierte Durchflußeinsteller 107 und 109 vorgesehen. Zur Regelung des Gesamtdurchflusses zwischen Versorger-Vorlauf und Rücklauf ist in der Rücklaufleitung ein kombinierter Differnzdruck- und Durchflußregler 111 eingebaut. Hieran schließt sich dann noch ein Absperrventil 113 (Figur 7) àn. In der zweiten (Bypaß-)Längsleitung 63.2 ist an der Schnittstelle zum Boilervorlauf, nämlich zur Querleitung 65.4 ein Ventil 115 zur Temperaturregelung im Boiler angeordnet, das über die Temperaturmessung im Boiler mittels eines Temperaturfühlers (nicht dargestellt) gestellt wird

Hieran schließt sich in der Leitung 63.2 ein Überströmregler 117 an.

Aus dem vorstehenden ergibt sich, daß eine erfindungsgemäße Vorrichtung aufgrund ihrer Matrixform in vielfältigster Weise geschaltet und eingesetzt werden kann, wobei die im Hinblick auf die Figuren 5 bis 8 erwähnten einzelnen Organe und Komponenten lediglich beispielhaft aufgeführt wurden. Die Matrix 61 selbst kann noch durch Querstreben 121 verstär kt und stabilisert sein. Die Anordnung ist in einem Gehäuse 123 untergebracht, welches vorzugswei se mit einer Isolierung versehen ist. Die ganze Anordnung wird mit - nicht dargestellten - Befestigungsansätzen, die mit der Matrix 61 einstückig ausgebildet sein können, an einer Wand befestigt.

## Patentansprüche

1. Vorrichtung zum Übergeben von in einem Fluid gespeicherter Wärme von einer Versorgungsleitung zu einem Abnehmer, mit Versorgungsvor-1 auf (67.1'), -rücklauf (67,3'), Abnehmervorlauf (67.1''), -rücklauf (67.3''), sowie gegebenenfalls Bypass- (65) und/oder Sicherheitsleitung (63.2)
dadurch gekennzeichnet,
daß sich zumindest teilweise schneidende Längs- und Querleitungen (13, 15; 43, 45; 63, 65) in einem Gußblock vorgesehen sind; daß die Leitungen an zumindest einigen ihrer Kreuzungspunkten miteinander ohne zwischengesetzte Verzweigungsrohrteile, in Verbindung stehen; daß in den Leitungen (13, 15; 43, 45; 63, 65) Sperrwände (23; 53; 73) vorgesehen sind, die einen sich parallel zur Leitungsrichtung erstreckenden Längsabschnitt aufweisen; und daß der Gußblock als variable Matrix (11, 61) ausgebildet ist, indem in Längsabschnitten der Sperrwände (23; 53; 73) verschließbare Durchlässe (25; 55; 75) ausgebildet sind und in einer benachbarten Außenwand mit einem Durchlaß (25; 55; 75) eine verschließbare Öffnung (21; 51; 71) fluchtet, die mindestens einen ebenso großen Durchmesser wie der Durchlaß (23; 53; 73) aufweist.

2. Vorrichtung nach Anspruch 1, dadurch gekennzeichnet, daß die Längsund Querleitungen (13 15; 43 45; 63, 65) in einer grundsätzlich gemeinsamen Ebene liegen.

3. Vorrichtung nach Anspruch 1 oder 2, dadurch gekennzeichnet, daß die ganze Matrix (11, 41, 61) einstückig ausgebildet ist.

4. Vorrichtung nach einem der vorangehenden Ansprüche, dadurch gekennzeichnet, daß Kreuzungsstellen von Längs- und Querleitungen (13; 15; 43, 45; 63, 65) derart ausgebildet sind, daß sich die Querschnitte jeder Leitung (13, 15; 43, 45; 63, 65) auf etwa die Hälfte des sonstigen Querschnitts einer Leitung vermindert, so daß die Außenflächen der Leitungen (13, 15; 43, 45; 63, 65) in den Kreuzungsbereichen mit den Außenflächen der Leitungen (13, 15; 43, 45; 63, 65) außerhalb der Kreuzungsbereiche fluchten.

5. Vorrichtung nach einem der vorangehenden Ansprüche, dadurch gekennzeichnet, daß in der Trennwand zwischen einer Längs- und einer Querleitung (13, 15; 43, 45; 63, 65) ein verschließbarer Durchlaß (25, 25''; 25.4, 55', 55''; 75) ausgebildet ist.

6. Vorrichtung nach einem der vorangehenden Ansprüche, dadurch gekennzeichnet, daß bei mindestens einem Durchlaß (25; 55; 75) einer Sperrwand (23; 53; 73) in einer benachbarten Seitenwand (19; 49; 69) einstückig ein herausragender Ansatz mit der Öffnung (21; 51; 71) ausgebildet ist.

7. Vorrichtung nach einem der vorangehenden Ansprüche, dadurch gekennzeichnet, daß die Durchlässe (25; 55; 75) als Ventilsitze ausgebildet sind.

8. Vorrichtung nach einem der vorangehenden Ansprüche, dadurch gekennzeichnet, daß Durchlässe (25; 55; 75) und/oder Öffnungen (21; 51, 71) Schraubgewinde aufweisen.

9. Vorrichtung nach einem der vorangehenden Ansprüche, dadurch gekennzeichnet, daß Wärmetauscher anschließbar sind.

10. Vorrichtung nach einem der vorangehenden Ansprüche, dadurch gekennzeichnet, daß einstückig Befestigungsansätze zum Befestigen an einer Wand od. dgl. ausgebildet sind.

11. Vorrichtung nach einem der vorangehenden Ansprüche, dadurch gekennzeichnet, daß zwischen benachbarten parallel zueinander verlaufenden Leitungen (13, 15; 43, 45; 63, 65) Querstreben (121) vorgesehen sind.

12. Vorrichtung nach Anspruch 11, dadurch gekennzeichnet, daß die Querstreben (121) einstückig mit der Matrix (11, 41, 61) ausgebildet sind.

13. Vorrichtung nach einem der vorangehenden Ansprüche, gekennzeichnet durch ein umgebendes Gehäuse (123).

## Claims

1. Apparatus for transferring heat stored in a fluid from a supply line to a consunner, with a supply forward flow means (67.1'), return flow means (67.3'), collector forward flow means (67.12'') and return flow means (67.32''), as well as optionally by-pass (63) and/or safety line (63.2), characterized in that at least partly interesecting longitudinal and transverse lines (13,13,43,43,63,63) are provided in a cast ingot, that the lines are connected with one another at least at some of their crossing points without interposed branch pipe parts, that confining walls (23,33,73) are provided in the lines (13,13,43,43,63,63) and have a longitudinal portion extending parallel to the line direction and that the cast ingot is constructed as a variable matrix (11,61), in that closable passages (23,33,73) are constructed in longitudinal portions of the confining walls (23,33,73) and in an adjacent outer wall a closable opening (21,31,71) is aligned with a passage (23,33,73), the diameter of the opening being at least as large as that of the passage (23,33,73).

2. Apparatus according to claim 1, characterized in that longitudinal and transverse lines (13,13,43,43,63,63) are located in a fundamentally common plane.

3. Apparatus according to claims 1 or 2, characterized in that the complete matrix (11,41,61) is constructed in one piece.

4. Apparatus according to one of the preceding claims, characterized in that crossing points of longitudinal andtransverse lines (13,13,43,43,63,63) are constructed in such a way that the cross-sections of each line (13,13,43,45,63,63) are reduced to approximately half the other cross-section of a line, so that the outer faces of the lines (13,15,43,45, 63,65) in the crossing zones are aligned with the outer faces of the lines (13,15,43,45,63,65) outside the crossing zones.

5. Apparatus according to one of the preceding claims, characterized in that a closable passage (25,25'',25.4,55', 55,',75) is formed in the partition between a longitudinal and a transverse line (13,15,43,45,63,65).

6. Apparatus according to one of the preceding claims, characterized in that at at least one passage (25,55,75) of a confining wall (23,53,73) a projecting lug with the opening (21,51,71) is constructed in one piece in an adjacent side wall (19,49,69).

7. Apparatus according to one of the preceding claims, characterized in that the passages (25,55,75) are constructed as valve seats.

8. Apparatus according to one of the preceding claims, characterized in that passages (25,55,75) and/or openings (21,31,71) have a screw thread.

9. Apparatus according to one of the preceding claims, characterized in that heat exchangers are connectable.

10. Apparatus according to one of the preceding claims, characterized in that fixing lugs are constructed in one piece for fixing to a wall or the like.

11. Apparatus according to one of the preceding claims, characterized in that cross braces (121) are provided between adjacent parallel lines (13,15,43,45,63,65).

12. Apparatus according to claim 11, characterized in that the cross braces (121) are constructed in one piece with the matrix (11,41,61)

13. Apparatus according to one of the preceding claims, characterized by a surrounding casing (123).


**Revendications.**


1. Dispositif pour transférer la chaleur emmagasinée dans un fluide d'un conduit de distribution à un usager, le dispositif comportant une conduite d'alimentation aller (67.1'), une conduite d'alimentation retour (67.3'), une conduite d'usager aller (67.1''), une conduite d'usager retour (67.3'') ainsi que le cas échéant une canalisation de dérivation (65) et/ou une canalisation de sécurité (63.2), caractérisé en ce qu'on prévoit dans un bloc de fonte des canalisations longitudinales et transversales (13, 15; 43, 45; 63, 65) se coupant au moins partiellement, que les canalisations sont reliées entre elles au moins en quelques-uns de leurs points d'intersection sans branchements intermédiaires, qu'on prévoit dans les canalisations (13, 15; 43, 45; 63, 65) des cloisons d'arrêt (23; 53,; 73) qui comportent une portion longitudinale s'étendant parallèlement au sens de la canalisation; et que le bloc de fonte est réalisé sous forme de matrice variable (11, 61) par le fait que des passages obturables (25;55; 75) sont réalisés dans des portions longitudinales des cloisons d'arrêt (23; 53; 73), et qu'une ouverture obturable (21; 51; 71),réalisée dans une paroi extérieure adjacente, se trouve chaque fois en vis-à-vis d'un passage obturable (25; 55; 75) et a un diamètre au moins aussi grand que celui du passage.

2. Dispositif selon la revendication 1, caractérisé en ce que les canalisations longitudinales et les canalisations transversales (13, 15; 43, 45; 63, 65) se trouvent dans un plan en principe commun.

3. Dispositif selon la revendication 1 ou 2, caractérisé en ce que toute la matrice (11, 41, 61) et réalisée d'une seule pièce.

4. Dispositif selon l'une des revendications précédentes, caractérisé en ce que les intersections de canalisations longitudinales et transversales (13, 15; 42, 45; 63, 65) sont réalisées de telle sorte que la section transversale de chaque canalisation (13,15; 43, 45; 63, 65) se réduit à peu près à la moitié de la section habituelle d'une canalisation, de sorte que les surfaces exterieures des canalisations (13, 15; 43, 45; 63, 65) dans les zones d'intersection coïncident, à l'extérieur des zones d'intersection avec les surfaces extérieures des canalisations (13, 15; 43, 45; 63, 65).

5. Dispositif selon l'une des revendications précédentes, caractérisé en ce que dans la paroi de séparation entre une canalisation longitudinale et une canalisation transversale (13, 15; 43, 45; 63, 65) est réalisé un passage obturable (25, 25''; 25.4, 55', 55''; 75).

6. Dispositif selon l'une des revendications précédentes, caractérisé en ce que, dans le cas d'au moins un passage (25; 55; 75) d'une cloison d'arret (23; 53; 73) un prolongement saillant est réalisé d'une seule pièce avec l'ouverture (21; 51; 71) dans une paroi latérale voisine (19; 49; 69).

7. Dispositif selon l'une des revendications précédentes, caractérisé en ce que les passages (25; 55; 75) sont réalisés en tant que sièges de soupapes.

8. Dispositif selon l'une des revendications précédentes, caractérisé en ce que les passages (25; 55; 75) et/ou les ouvertures (21; 51; 71) comportent des filetages.

9. Dispositif selon l'une des revendications précédentes, caractérisé en ce qu'on peut raccorder des échangeurs thermiques.

10. Dispositif selon l'une des revendications précédentes, ractérisé en ce que des prolongements de fixation sont réalisés d'une seule pièce sur une paroi ou l'analogue.

11. Dispositif selon l'une des revendications précédentes, caractérisé en ce qu'on prévoit entre des canalisations voisines et paralleles entre elles (13, 15; 43, 45; 63, 65) des entretoises (121).

12. Dispositif selon la revendication 11, caractérisé en ce que les entretoises (121) sont réalisées d'une seule pièce avec la matrice (11, 41, 61).

13. Dispositif selon l'une des revendications précédentes, caractérisé par un carter (123) qui l'entoure.

FIG.1

FIG.2

FIG.3

Fig.4

Fig. 5

Fig. 6

Fig.7

Fig. 8